# EUROPÄISCHE PATENTSCHRIFT

(11) **EP 3 554 790 B1**
(45) Veröffentlichungstag und Bekanntmachung des Hinweises auf die Patenterteilung: **04.03.2026**
(21) Anmeldenummer: 17811904.6
(22) Anmeldetag: 04.12.2017
(51) Int. Cl.: B29C 48/00, B32B 27/06

(54) **VERFAHREN ZUR HERSTELLUNG EINES SCHAUMFOLIENLAMINATS, DIE HIERBEI EINGESETZTE KUNSTSTOFFMISCHUNG, DAS SCHAUMFOLIENLAMINAT SOWIE DESSEN VERWENDUNG**
PROCESS FOR PRODUCING A FOAM FILM LAMINATE, THE PLASTICS MIXTURE USED THEREIN, THE FOAM FILM LAMINATE, AND USE THEREOF
PROCÉDÉ DESTINÉ À LA FABRICATION D'UN STRATIFIÉ DE FILM EXPANSÉ, MÉLANGE DE PLASTIQUES UTILISÉ POUR CE PROCÉDÉ, STRATIFIÉ DE FILM EXPANSÉ, AINSI QUE SON UTILISATION

(30) Priorität: 19.12.2016 DE 102016225468
(43) Veröffentlichungstag der Anmeldung: 23.10.2019
(73) Patentinhaber: Benecke-Kaliko AG, 30419 Hannover (DE)
(72) Erfinder: MANI, Joseph, 73054 Eislingen (DE); HÜLSEWEDE, Volker, 73326 Deggingen (DE)
(74) Vertreter: Preusser, Andrea
(86) Internationale Anmeldenummer: PCT/EP2017/081330
(87) Internationale Veröffentlichungsnummer: WO 2018/114298

(56) Entgegenhaltungen:
- EP-A1- 1 688 460
- WO-A1-2016/008613
- DE-A1- 102014 222 958
- DE-A1- 19 915 314
- US-A- 4 832 770
- MAE ET AL: "Effects of local strain rate and micro-porous morphology on tensile mechanical properties in PP/EPR blend syntactic foams", MATERIALS SCIENCE AND ENGINEERING: A, ELSEVIER, AMSTERDAM, NL, vol. 496, no. 1-2, 25 November 2008 (2008-11-25), pages 455 - 463, XP025432804, ISSN: 0921-5093, [retrieved on 20080622], DOI: 10.1016/J.MSEA.2008.06.021

## Beschreibung

Die Erfindung betrifft ein Verfahren zur Herstellung eines tiefziehfähigen Schaumfolienlaminats mit mindestens einer eine Lackschicht aufweisenden kompakten Dekorschicht und mindestens einer mit der Dekorschicht verbundenen Schaumschicht aus extrudiertem geschäumten Kunststoff, die hierbei eingesetzte Kunststoffmischung, ein nach diesem Verfahren erhaltenes Schaumfolienlaminat und dessen Verwendung.

Die EP 1 688 460 A1 beschreibt Verfahren zur Herstellung eines tiefziehfähigen Schaumfolienlaminats mit mindestens einer eine Lackschicht aufweisenden kompakten Dekorschicht und mindestens einer mit der Dekorschicht verbundenen Schaumschicht aus extrudiertem geschäumten Kunststoff, wobei die Herstellung der Schaumschicht derartig erfolgt, dass der Kunststoff in Gegenwart eines festen chemischen, inerten flüssigen und/oder inerten gasförmigen Treibmittels extrudiert wird, die gebildete Schaumschicht mit der lackierten Dekorschicht versehen wird, gegebenenfalls mit der unlackierten kompakten Dekorschicht im Rahmen einer Co-Extrusion, wobei vor oder nach dem Ausbilden der lackierten kompakten Dekorschicht auf der Schaumschicht eine vernetzende Behandlung mit Elektronenstrahlen durchgeführt wird

Die WO 2016/008613 A1 beschreibt Schaumfolienlaminat, umfassend eine kompakte Deckschicht mit einer dreidimensional strukturierten oder glatten Oberfläche auf der Oberseite und eine Schaumschicht auf der Unterseite der Deckschicht, wobei die Deckschicht eine äußere Schicht und eine innere Schicht aufweist, die äußere Schicht eine Dicke im Bereich von 0,05 bis 0,3 mm aufweist, die innere Schicht eine Dicke im Bereich von 0,2 bis 0,6 mm aufweist und an der Schaumschicht gebunden ist und die Schaumschicht eine Dicke im Bereich von 0,5 bis 2 mm und eine Dichte von mindestens 350 kg/m aufweist.

Die Erfindung geht von folgendem Stand der Technik aus: Die DE 10 2011 000 399 A1 beschreibt ein Verfahren zur Herstellung einer mehrschichtigen Kunststofffolie mit mindestens einer kompakten Deckschicht und mindestens einer unter der Deckschicht angeordneten Schicht aus geschäumtem Kunststoff. Die Schicht aus geschäumtem Kunststoff wird durch Einblasen eines inerten und unter Überdruck stehenden Gases in eine Kunststoffschmelze und anschließendes Entspannen des unter Überdruck stehenden Gases erzeugt.

Die DE 10 2014 222 958 A1 beschreibt ebenfalls ein Verfahren zur Herstellung eines Schaumfolienlaminats mit mindestens einer kompakten Deckschicht und mit mindestens einer mit der Deckschicht verbundenen Schicht aus extrudiertem geschäumtem Kunststoff. Hierbei wird das Kunststoffmaterial mit einem bei Raumtemperatur festen chemischen Treibmittel versetzt und während oder nach der Extrusion bis zu oder über die Aktivierungstemperatur des festen Treibmittels erhitzt, um dadurch eine geschäumte Kunststoffschicht zu erhalten. Das Kunststoffmaterial enthält 5 bis 60 Gew.-% wenigstens eines HMS-Polyolefins mit einer Dehnviskosität gemäß ISO 20965 von 10⁴ bis 10⁷ Pa.s, gemessen bei 190°C in einem Bereich der Hencky Strain-Rate von 0,01 s⁻¹ bis 1 s⁻¹ bei einem Hencky Strain von 3,0.

Die Lehren nach den oben bezeichneten Patentanmeldungen beschreiben also jeweils ein Verfahren zur Herstellung eines Schaumfolienlaminats. Die zunächst gebildeten Schäume zeigen einen E-Modul von größer als 34 N/mm². Das hiermit verbundene Problem ist die ersichtlich geringe Weichheit des Schaumes, was als ein Makel in der Haptik bewertet wird; denn je geringer der E-Modul ist, desto weicher ist der Schaum und dementsprechend zeigt er eine angenehme Haptik. Zur Haptik ist anzumerken, dass sich diese sowohl horizontal als auch vertikal (Eindruck-Haptik) bestimmen lässt. Bei der nachfolgend geschilderten Erfindung ist die vertikale Haptik von besonderer Bedeutung. Sie führt auch zu einer Verbesserung der horizontalen Haptik.

Aus den Nachteilen des oben bezeichneten Standes der Technik ergibt sich die Aufgabe vorliegender Erfindung: Hierbei wird zunächst als maßgeblicher Faktor der Einstellung einer zufriedenstellenden Haptik der E-Modul berücksichtigt, dies sowohl im Negativ-Tiefziehverfahren (IMG-Prozess) als auch im Positiv-Tiefziehverfahren bis zu einem Verstreckungsgrad von kleiner als 300%. Die Erfindung zielt darauf ab, einen mitteldichten Schaum zu entwickeln, der für das Negativ-Tiefziehen, auch IMG-Anwendung genannt, und zudem für das Positiv-Tiefziehen geeignet ist und einen deutlich geringeren E-Modul bei der zunächst hergestellten Schaumschicht und auch bei dem Schaumfolienlaminat zeigt, dies unter Beibehaltung hoher Temperaturbeständigkeit des Produktes bei 120°C, insbesondere im Hinblick auf die Narbung. Die Reduktion der Steifigkeit führt zu einer deutlichen Verbesserung der Weichheit dieser Materialien bzw. deren Haptik.

Die oben bezeichnete Aufgabe der Erfindung wird gelöst durch ein Verfahren zur Herstellung eines tiefziehfähigen Schaumfolienlaminats mit mindestens einer eine Lackschicht aufweisenden kompakten Dekorschicht und mindestens einer mit der Dekorschicht verbundenen Schaumschicht aus extrudiertem geschäumten Kunststoff, wobei die Herstellung der Schaumschicht derartig erfolgt, dass der Kunststoff in Gegenwart eines festen chemischen, inerten flüssigen und/oder inerten gasförmigen Treibmittels extrudiert wird, die gebildete Schaumschicht mit der lackierten Dekorschicht versehen wird, gegebenenfalls mit der unlackierten kompakten Dekorschicht im Rahmen einer Co-Extrusion, wobei vor oder nach dem Ausbilden der lackierten kompakten Dekorschicht auf der Schaumschicht eine vernetzende Behandlung mit Elektronenstrahlen durchgeführt wird, das dadurch gekennzeichnet ist, dass der zur Extrusion herangezogene Kunststoff eine Mischung aus LLDPE, aus LDPE und aus einer PP/EPR-Mischung einer Dichte von 0,850 g/cm³ bis 0,925 g/cm³, insbesondere 0,860 g/cm³ bis 0,890 g/cm³, enthält.

Eine Weiterbildung des Verfahrens besteht im Hinblick auf die Verarbeitung des Schaumfolienlaminats gemäß der Erfindung nach dem Positiv-Tiefziehverfahren darin, dass die lackierte kompakte Dekorschicht in einem Prägeschritt genarbt wird.

Den oben bezeichneten Abkürzungen kommen folgende Bedeutungen zu: LLDPE: linear low density polyethylene; LDPE: low density polyethylene und PP/EPR: Polypropylen/Ethylenpropylen-Rubber. Zum PP/EPR ist anzumerken, dass es sich im weitesten Sinne um eine Mischung von Polypropylen und Ethylenpropylen-Rubber handelt, wobei diese eine einphasige Polymermischung (Legierung) darstellen kann, wobei ein Blend besonders bevorzugt ist, der als mehrphasiges Gemisch vorliegt, wobei Polypropylenteilchen in einer EPR-Matrix verteilt sind. Hier folgt die Erfindung den Erkenntnissen des Standes der Technik, wonach sich Polymerblends nicht auf molekularer Ebene vermischen, sondern winzige Teilchenstrukturen des einen Kunststoffs in einer dominierenden Matrix bilden. Dabei bildet hier das EPR die Matrix. Beide Produktgruppen, d.h. Polymerlegierungen und die Blends, bilden Kunststoffgemische, die sich insbesondere durch Schlagzähigkeit, Steifheit und Wärmeformbeständigkeit auszeichnen. Daraus resultiert auch ein besonderer Vorteil bei der Anwendung, wonach schlagzähe Polymerlegierungen in der Pkw-Innenausstattung und für stoßgefährdete Pkw-Außenteile verwendet werden.

Zur weitergehenden Charakterisierung der PP/EPR-Mischung dient deren Dichte, wie oben bezeichnet. Durch eine einfache Dichtemessung lässt sich eine zugelieferte PP/EPR-Mischung als für die vorliegende Erfindung geeignet definieren. Die Dichterahmen entsprechen weitgehend der quantitativen Zusammensetzung, d.h. Polypropylen in der EPR-Matrix. Die Dichten werden mit 0,850 g/cm³ bis 0,925 insbesondere 0,865 bis 0,905 ganz besonders bevorzugt 0,875 bis 0,885 g/cm³ bezeichnet

Für den mit der Erfindung angestrebten technischen Erfolg ist der Anteil an Polypropylen in der gesamten Kunststoffmischung, die einer Extrusion in Gegenwart von Treibmitteln unterliegt, bedeutsam. So ist es vorteilhaft, wenn die zu extrudierende Kunststoffmischung etwa 10 bis 30 Gew.-% PP, vorzugsweise 12 bis 25 Gew.-% und insbesondere 12,5 bis 18 Gew.-% PP enthält.

Darüber hinaus ist es zweckmäßig, die Mengenrelationen der drei Bestandteile der erfindungsgemäß eingesetzten Kunststoffmischung LLDPE, LDPE und PP/EPR vorteilhaft zu bemessen. Danach wird es bevorzugt, dass in der zu extrudierenden Kunststoffmischung auf 1 Gewichtsteil PP/EPR-Mischung 0,7 bis 3,0, insbesondere 1,5 bis 2,5 Gewichtsteile LLDPE sowie 0,5 bis 1,5, insbesondere 0,7 bis 1,2 Gewichtsteile LDPE entfallen.

Um die mit der Erfindung angestrebten Effekte zu optimieren, ist es vorteilhaft, wenn die Bestandteile der zu extrudierenden Kunststoffmischung die folgenden physikalischen Werte aufweisen: **a)** LLDPE einen MFI (190°C, 2,16 kg nach DIN EN ISO 1133) von 0,5 bis 4,0 g/10 min, insbesondere 0,7 bis 1,5 g/10 min, und/oder oder einen Biegemodul (nach ISO 178) von 2 bis 20 MPa, insbesondere von 4 bis 10 MPa, **b)** LDPE einen MFI (190°C, 2,16 kg nach DIN EN ISO 1133) von 0,5 bis 4,0 g/10 min, insbesondere 0,7 bis 1,5 g/10 min, und/oder oder einen Biegemodul (nach ISO 178) von 100 bis 400 MPa, insbesondere von 200 bis 300 MPa, c) PP/ERP einen MFI (230°C, 2,16 kg nach DIN EN ISO 1133) von 0,05 bis 5,0 g/10 min, insbesondere von 0,50 bis 1,0, und/oder einen Biegemodul (nach ISO 178) von 10 bis 500 MPa, insbesondere von 100 bis 350 MPa.

Zur weitergehenden Erläuterung dienen die folgenden Angaben zu LLDPE, EPR/EPM, LDPE sowie Polypropylen, dies als bevorzugte Beispiele:
- LLDPE:: Polyethylen-basierende Kunststoffe mit einem Gewichtsanteil an Ethylen von > 50 Gew.-%. Als Ethylen-basierte weiche Polymere können insbesondere Copolymere des Ethylens mit alpha-Olefinen, insbesondere Propylen, 1-Buten, 1-Hexen, 1-Octen, Vinylacetat, Methyl- oder Butylacrylat, sein;
- EPR/EPM:: Ethylen-Propylen-Rubber mit einem Ethylen-Anteil von 45 bis 80 Gew.-% sowie einer Mooney-Viskosität bei 125°C von 5 bis 200 MU.
- LDPE:: Ein nur aus Ethylen bestehendes Polymer, welches in einem Hochdruckverfahren hergestellt wurde; MFI Bereich 0,5 bis 4,0 g/10 min (190°C; 2,16 kg), Dichtebereich 0,910 bis 0,940 g/cm³;
- Polypropylen:: Polymere, basierend auf Propylen und gegebenenfalls Copolymeren, insbesondere Ethylen, mit einem Gewichtsanteil an Propylen von > 50 Gew.-%. Polypropylene sind insbesondere solche Polymere, die rein aus Propylen hergestellt wurden, sogenannte PP-Homopolymere (Polypropylen, Homo-Polymer), Copolymere mit bis zu 10% Comonomeranteil PP-Copo (Polypropylen) oder Copolymere mit bis zu 3% Comonomeranteil (PP-Random), sowie oben genannte PP-Typen in einer Mischung mit EPR, so genannte RAHECO (Random Heterophasen Copolymere PP/EPR-Mischungen); MFI Bereich 0,1 bis 8,0 g/10 min (230°C, 2,16 kg).

Bei der Durchführung des erfindungsgemäßen Verfahrens im Rahmen einer Extrusion werden Treibmittel herangezogen. Dabei kann es sich um feste chemische, inerte flüssige und/oder inerte gasförmige Treibmittel handeln. Vorzug ist im Allgemeinen dem festen chemischen Treibmittel zu geben. Dabei ist es vorteilhaft, dass das Treibmittel unter endothermen und exothermen festen chemischen Treibmitteln ausgewählt wird, insbesondere unter Citronensäure und deren Salzen, vorzugsweise deren Alkali-, Erdalkali- und Ammoniumsalzen, Natriumhydrogencarbonat, Azodicarbonamid oder Mischungen von diesen und/oder Citronensäureestern. In Einzelfällen ist es bevorzugt, dass als Treibmittel ein Gas herangezogen wird, insbesondere in Form von Stickstoff, Kohlendioxid und/oder Wasser.

Zweckmäßigerweise beträgt die Aktivierungstemperatur der festen chemischen Treibmittel 180°C oder mehr, insbesondere 200°C oder mehr. Des Weiteren ist es bevorzugt, dass der Gehalt an festem chemischen Treibmittel, bezogen auf die zu extrudierende Kunststoffmischung, 0,1 bis 5 Gew.-%, vorzugsweise 0,25 bis 3 Gew.-%, insbesondere 0,5 bis 2 Gew.-% beträgt.

Grundsätzlich gilt, dass die zu extrudierende Kunststoffmischung als Schmelze, als Granulat oder in Pulverform mit dem jeweiligen Treibmittel versetzt bzw. vermischt wird.

Detailliert soll nachfolgend zunächst das erfindungsgemäße Verfahren unter Einsatz von festen chemischen Treibmitteln behandelt werden: Feste chemische Treibmittel sind insofern bevorzugt, da sie Zersetzungstemperaturen aufweisen, die in einem Temperaturbereich liegen, der typischerweise bei der Extrusion von Kunststoffmaterialien zur Erzeugung geschäumter Schichten gewählt wird. Zudem werden bei der thermischen Zersetzung der vorgenannten chemischen Treibmittel in der Regel toxikologisch unbedenkliche Gase frei und zudem auch keine Substanzen, die sich nachteilig auf die Stabilität der verwendeten Polymere auswirken. Ein gewisser Vorteil fester chemischer Treibmittel gegenüber der unmittelbaren Einspeisung eines Gases liegt darin, dass die festen chemischen Treibmittel aufgrund ihrer Teilchenstruktur gleichzeitig als Nukleationskeime für die Gasblasenbildung fungieren, weshalb eine sehr gleichmäßige und feinporige Schaumstruktur erhalten wird.

Dem Kunststoffmaterial können aber auch Nukleierungsmittel zugesetzt werden, wie beispielsweise Talkum, Siliziumoxid oder Titandioxid. Die Nukleierungsmittel können für eine weitere Optimierung der Zellstruktur dienlich sein.

Typische Aktivierungstemperaturen der im Rahmen des erfindungsgemäßen Verfahrens eingesetzten festen chemischen Treibmittel liegen bei 180°C oder mehr, insbesondere bei 200°C oder mehr. Hierbei kann durch entsprechende Wahl des chemischen Treibmittels dessen Aktivierungstemperatur auch in der Weise gewählt werden, dass die Aktivierungstemperatur während der Extrusion des Kunststoffmaterials noch nicht erreicht beziehungsweise noch nicht überschritten wird. Hierdurch kann der Schritt des Aufschäumens auch zu einem späteren Zeitpunkt erfolgen, sofern dies gewünscht ist. Dies kann in an sich bekannter Weise durch einen Schäumofen oder ein Salzbad erfolgen, wie in der DE 10 2005 050 524 A1 beschrieben. Bevorzugt ist es jedoch im Rahmen der vorliegenden Erfindung, dass die Aktivierungstemperatur des festen chemischen Treibmittels bereits im Extrusionsprozess erreicht beziehungsweise überschritten wird und damit der zusätzliche Schritt des nachträglichen Aufschäumens obsolet ist.

Die Einsatzmenge an festem chemischen Treibmittel richtet sich nach den gewünschten Schaumeigenschaften sowie nach der durch das chemische Treibmittel freigesetzten relativen Gasmenge. Typische Einsatzmengen an festem chemischen Treibmittel, bezogen auf das Kunststoffmaterial für die Schicht aus geschäumtem Kunststoff, liegen zweckmäßigerweise bei 0,1 bis 5 Gew.-%, bevorzugt bei 0,25 bis 3 und insbesondere bei 0,5 bis 2 Gew.-%. Diese Einsatzmengen sind vorteilhaft, weil hierbei Gasmengen freigesetzt werden, die die Schaumstoffschicht in der üblicherweise gewünschten Stärke aufschäumen.

Des Weiteren kann es von Vorteil sein, wenn das feste chemische Treibmittel in einem bestimmten Partikelgrößenbereich liegt. Hierdurch kann nach homogenem Einarbeiten des festen chemischen Treibmittels in das Polymermaterial für die Schaumstoffschicht die Porengröße gesteuert werden. Typischerweise ist es vorteilhaft, wenn die Poren eine gewisse Größe nicht überschreiten. Zu diesem Zweck wird das feste chemische Treibmittel vorzugsweise mit einer mittleren Partikelgröße von 1 bis 25 µm eingesetzt, insbesondere von 5 bis 15 µm. Die mittlere Partikelgröße bezeichnet hier den mittleren Partikeldurchmesser und kann über an sich bekannte Methoden wie Rasterelektronenmikroskopie ermittelt werden.

Zum Einsatz eines gasförmigen Treibmittels: Um durch Einleiten geeigneter Gase ein kontrolliertes Aufschäumen der Polymerschmelze zu erreichen, sind bestimmte rheologische Grundvoraussetzungen zu erfüllen. Die Viskosität der Polymer-schmelze muss hoch genug sein, um ein stabiles geschäumtes System zu generieren, bei dem die Schaumzellen innerhalb eines bestimmten Rahmens eine gleichmäßige Schaumzellengrößenverteilung besitzen. Bei einer zu geringen Viskosität werden keine Zellen in kontrollierbarem Rahmen gebildet, weil das eingeleitete Gas der Schmelze entweichen wird. Weiter muss das geschäumte Material genügend Stabilität besitzen, um in einem nachfolgenden Prozessschritt derart mit einer weiteren Folienlage laminiert zu werden, ohne dass das geschäumte Material kollabiert und wieder kompaktiert vorliegt.

Demzufolge wird in die bezeichnete Kunststoffschmelze ein inertes und unter Überdruck stehendes Gas eingeleitet. Anschließend erfolgt ein Entspannen des unter Überdruck stehenden Gases. Das Einblasen des inerten und unter Überdruck stehenden Gases in die Kunststoffschmelze erfolgt während des Extrusionsprozesses.

Für die Durchführung des erfindungsgemäßen Verfahrens unterliegt die Erfindung keinerlei Beschränkung im Hinblick auf die eingesetzten Extrusionsanlagen. Für das erfindungsgemäße Verfahren können unterschiedliche Extrusionsanlagen zum Einsatz kommen. Hier seien beispielsweise Tandemextruder oder Doppelschneckenextruder genannt. Die Austrittsdüse kann unterschiedlich ausgebildet sein, z.B. in Form einer Breitschlitzdüse, einer Ringspaltdüse, einer Viellochdüse oder einer Blockschlitzdüse. Für eine gleichzeitige Extrusion von Dekorschicht und geschäumter Schicht können auch Coextrusionsanlagen eingesetzt werden.

Im Inneren des Extruders herrscht vor der Extrusionsdüse typischerweise ein Druck von mindestens 70 bar, bevorzugt mindestens 100 bar, insbesondere mindestens 120 bar. Durch die Abnahme des Druckes von mehr als 70 bar vor der Düse auf Atmosphärendruck hinter der Düse expandiert die mit den Gasen aus dem festen chemischen Treibmittel beladene Polymermischung so, dass ein durch und durch gleichmäßig geschäumtes Produkt gebildet wird. Durch dieses Herstellungsverfahren des Schaumes können Schaumdichten von 20 bis 800 kg/m³ mit einer Schaumdicke von 0,5 bis 3,0 mm erzeugt werden.

Die Erfindung zielt ab auf ein tiefziehfähiges Schaumfolienlaminat mit mindestens einer eine Lackschicht aufweisenden kompakten Dekorschicht. Bei der Dekorschicht und der darauf ausgebildeten Lackschicht unterliegt die Erfindung ebenfalls keiner relevanten Einschränkung. Dennoch ist die kompakte Dekorschicht vorzugsweise ein Flächengebilde auf der Basis von Polyolefinen, PVC, Polyurethanen, Polyamiden, Polyestern, Polylactiden, Cellulose oder Lignin sein. Für die gute Herstellbarkeit der mehrschichtigen Kunststofffolie bei guten Produkteigenschaften hat es sich als vorteilhaft erwiesen, dass bei dem Verfahren die Dekorschicht auf Polyolefinen, insbesondere auf Polyethylen oder Polypropylen, basiert. Die Lackschicht kann dann später in üblicher Weise aufgetragen werden, wobei die Lackschicht vorzugsweise auf einem PU-Lack beruht. Der Auftrag erfolgt vorzugsweise anhand des Rastertiefdruckverfahrens.

Die kompakte Dekorschicht kann vorteilhafte Ausgestaltungen erfahren. So kann sie zweckmäßigerweise Additive enthalten, insbesondere Stabilisatoren, Farbmittel, Füllstoffe und/oder Verstärkungsstoffe, was auch für die Schaumschicht gilt.

Die Dekorschicht weist vorzugsweise eine Dicke von 0,1 bis 2 mm, insbesondere 0,2 bis 0,8 mm, auf, wobei der Bereich von 0,3 bis 0,5 mm besonders bevorzugt ist. Die Lackschicht hat zweckmäßigerweise eine Dicke von 1 bis 15 µm, insbesondere von 2 bis 10 µm, wobei eine Dicke von 2 bis 5 µm besonders bevorzugt ist.

Anschließend wird die erfindungsgemäß relevante Maßnahme des Vernetzens erläutert, wobei jedoch vorab grundsätzliche Ausführungen zu dem Negativ- und Positiv-Tiefziehen erfolgen: Beim Positiv-Tiefziehen wird ein Laminat, bestehend aus einer kompakten Dekorschicht, insbesondere aus einer lackierten kompakten Dekorschicht, und einer unvernetzten geschäumten Folie, mit einer Narbung versehen, vernetzt und dann tiefgezogen. Beim Negativ-Tiefziehen wird von einer vernetzten geschäumten Folie ausgegangen. Hieraus wird ein Laminat, bestehend aus einer lackierten kompakten Dekorschicht und einer vernetzten geschäumten Folie, hergestellt, demzufolge ein Produkt ohne Narbe. Dieses kann dem Tiefziehen (In-Mould-Graining) unterzogen werden. Darüber hinaus kann die kompakte Dekorschicht mit einer geschäumten Folie coextrudiert werden. Anschließend wird eine Lackierung vorgenommen. Das lackierte Laminat kann genarbt werden und einem Positiv-Tiefziehen unterzogen werden. Wählt man in diesem Fall eine kompakte Dekorschicht, insbesondere eine lackierte kompakte Dekorschicht, welche durch beispielsweise Elektronenstrahlung keine Vernetzung erfährt, so kann auf diesem Wege auch eine Konstruktion eingesetzt werden, bei der die geschäumte Unterfolie vernetzt und somit tiefziehfähig ist. In diesem Fall kann auch das Negativ-Tiefziehen durchgeführt werden und anschließend die lackierte kompakte Dekorschicht auf die vernetzte Schaumschicht zur Weiterverwendung am Negativ-Tiefziehverfahren aufgetragen wird.

So kann beispielsweise eine weitere Schaumschicht auf die oben dargestellte erste Schaumschicht aufgebracht werden, wobei die zweite Schaumschicht vorzugsweise eine Dicke von 1,00 bis 5 mm aufweist und eine Dichte von kleiner als 100 kg/m³ besitzt. Die Haupteigenschaften dieser zusätzlich ausgebildeten Schaumschicht sind die besondere Weichheit und ein geringes Gewicht. Dies führt dazu, dass ein Verstreckungsgrad von kleiner als 200% von Nutzen ist.

Zwingendes Merkmal bei der Durchführung des erfindungsgemäßen Verfahrens ist es, dass eine wünschenswerte Vernetzung durchgeführt wird. Hiermit soll der Schaumschicht eine ausreichende mechanische Festigkeit und Temperaturbelastbarkeit verliehen werden.

Dabei kann das Vernetzen in vorteilhafter Weise erst nach dem Verbinden der Schaumschicht mit der lackierten kompakten Dekorschicht, insbesondere eine mit einer lackierten kompakten Dekorschicht, gemeinsam mit letzterer erfolgen, da auf diese Weise sowohl die Dekorschicht als auch die Schaumschicht vernetzt werden. Diese Ausgestaltung ist besonders vorteilhaft, wenn die Schaumschicht und die Deckschicht, wie vorstehend ausgeführt wurde, über eine Co-Extrusion unmittelbar miteinander verbunden wurden. Die Vernetzung selbst kann hierbei auf jede dem Fachmann bekannte Weise erfolgen, wobei vorzugsweise energiereiche Strahlung verwendet wird. Zu diesem Zweck kann insbesondere Elektronenstrahlung eingesetzt werden.

Bei der Vernetzungsmaßnahme ist es bevorzugt, dass die Schaumschicht insbesondere durch Behandlung mit Elektronenstrahlen vernetzt wird, insbesondere bis auf einen Gelgehalt von 10 bis 70%, vorzugsweise von 30 bis 55% und insbesondere von 40 bis 50%, gemessen nach 24-stündiger Extraktion in siedendem Xylol. Hierbei wird insbesondere eine Strahlendosis von 30 bis 120 kGy angewandt. Unterhalb von 30 kGy wird keine hinlängliche Tiefziehfähigkeit erreicht. Wird der Wert von mehr als 120 kGy überschritten, dann führt dies zu einer mangelnden Radiendarstellung.

Des Weiteren wird zweckmäßigerweise bei einer Weiterbildung des erfindungsgemäßen Verfahrens so vorgegangen, dass die lackierte kompakte Dekorschicht vor dem Vernetzen in einem Prägeschritt mit einer dreidimensionalen Struktur zur Weiterverwendung in einem Positiv-Tiefziehverfahren versehen wird oder die Schaumschicht vernetzt und anschließend die lackierte kompakte Dekorschicht auf die vernetzte Schaumschicht zur Weiterverwendung in einem Negativ-Tiefziehverfahren aufgetragen wird.

Das erfindungsgemäß erhältliche Schaumfolienlaminat ist nicht auf die oben dargestellten Strukturen beschränkt. So kann es in Einzelfällen von Vorteil sein, dass das Schaumfolienlaminat auf der Seite der lackierten kompakten Dekorschicht und/oder der Seite der Schaumschicht thermisch und/oder durch Verkleben mit weiteren auf Polymeren basierenden Schichten verbunden werden. Hierbei können auch insbesondere Metallfolien und Textilien in Betracht kommen. Werden weitere Polymerschichten aufgebracht, kann als thermische Verbindungsmethode auch die Co-Extrusion herangezogen werden.

Die Erfindung ist schließlich auch auf ein Schaumfolienlaminat gerichtet, das nach dem erfindungsgemäßen Verfahren erhältlich ist und das gekennzeichnet ist durch einen E-Modul (nach DIN EN ISO 527-3) von 30 bis 60 N/mm².

In der Praxis hat es sich gezeigt, dass das erfindungsgemäße Schaumfolienlaminat zweckmäßigerweise folgende Strukturen aufweist: Für Bauteile mit einem Verstreckungsgrad kleiner 300% besteht die Folienkonstruktion vorzugsweise aus einer Lackschicht, einer kompakten Dekorschicht und einer Schaumschicht. Für Bauteile mit einem Verstreckungsgrad kleiner 200% besteht die Folienkonstruktion zweckmäßigerweise aus einer Lackschicht, einer kompakten Dekorschicht, einer üblichen erfindungsgemäß ausgebildeten Schaumschicht und einer weiteren Schaumschicht, wobei die Lackschicht vorzugsweise auf Polyurethan basiert, was im Rahmen Erfindung allgemein gilt, und eine Dicke von kleiner als 10 µm aufweist. Die Dicke der lackierten kompakten Dekorschicht beträgt insbesondere 0,3 bis 0,50 mm. Weiter besteht sie aus einer modifizierten Schaumschicht (erfindungsgemäß) in einer Dicke von vorzugsweise 0,5 bis 2 mm, insbesondere 0,8 bis 1,2 mm. Letzteres gilt allgemein. Die modifizierte Schaumschicht besitzt zweckmäßigerweise eine Dichte von > 500 kg/m³. Die zusätzliche Schaumschicht weist vorzugsweise eine Dicke von 1,00 bis 5,0 mm auf und besitzt zudem eine Dichte < 100 kg/m³. Die Haupteigenschaften dieser Schaumschicht liegen in der besonderen Weichheit mit ihrem geringen Gewicht.

Bei den obigen Konstruktionen wird insbesondere wie folgt vorgegangen: Die erste erfindungsgemäße Schaumschicht wird zuerst als Schaum direkt extrudiert und anschließend mit einer lackierten Dekorschicht thermisch verbunden, gegebenenfalls auch mit einer zweiten Schaumschicht (sh. oben). Während der thermischen Kaschierung wird die lackierte kompakte Dekorschicht mit einer Narbe versehen. Die so erzeugte Konstruktion wird anschließend bestrahlt, um nach dem Positiv-Tiefziehverfahren verarbeitet zu werden.

Die Bestrahlung der Konstruktion mit einer Elektronenstrahlung von 30 bis 120 kGy, insbesondere von 50 bis 70 kGy, ist zweckmäßig, um die benötigte Verstreckung und Narbstabilität der Dekorschicht im Positiv-Tiefziehen zu gewährleisten.

Für eine im IMG-Verfahren besonders geeignete Folie wird die erfindungsgemäße Schaumschicht zuerst als Schaum direkt extrudiert und anschließend bestrahlt. Eine Bestrahlung dieser Schaumschicht mit Elektronenstrahlen von 30 bis 120 kGy, insbesondere 50 bis 70 kGy, ist auch hier zweckmäßig, um die Verstreckung im IMG-Verfahren zu gewährleisten. Die so bestrahlte Schaumschicht wird mit einer lackierten kompakten Dekorschicht thermisch verbunden, gegebenenfalls auch mit der oben bereits angesprochenen weiteren Schaumschicht. So erzeugt man eine Konstruktion, die im Negativ-Tiefziehverfahren oder IMG-Verfahren verarbeitet werden kann.

Ein weiterer Lösungsbestandteil der erfindungsgemäßen Aufgabe besteht darin, vorteilhafte Verwendungen für das Verfahrenserzeugnis bzw. das Schaumfolienlaminat gemäß der Erfindung vorzugschlagen. Somit betrifft die Erfindung die vorteilhafte Verwendung des erfindungsgemäßen Schaumfolienlaminats als tiefgezogenes, insbesondere hinterspritztes oder hinterpresstes oder hinterschäumtes Formteil, insbesondere in Flugzeugen, in Kraftfahrzeugen, für Fahrzeuginnenverkleidungen oder -verkleidungsteile, insbesondere Schalttafeln oder Armaturenbrettern, Säulen, Kraftfahrzeugseitenverkleidungen, -türverkleidungen und -ablagen. Die Erfindung richtet sich auch insbesondere auf die vorteilhafte Verwendung des Schaumfolienlaminats als ungeschwächte Dekorfolie für Airbagverkleidungen.

Mögliche Anwendungen bestehen jedoch auch in anderen Bereichen, so im Baubereich (z.B. Trittschallschutz bei Laminatböden, Wärmeisolierung von Rohren, Randstreifen bei der Bodenverlegung) und im Verpackungsbereich. Bei den jeweiligen Verfahren, die der Anwendung vorausgehen, ist grundsätzlich das Thermoformen, das In-Mould-Graining, Low-Pressure-Moulding mit der Erzeugung einer dreidimensionalen Oberfläche zu bedenken.

Üblicherweise werden die erfindungsgemäß erzeugten Schaumfolienlaminate vorteilhaft in Bereichen eingesetzt, wo zumindest die lackierte kompakte Dekorschicht sichtbar ist. Bei derartigen Anwendungen, wie beispielsweise im Bereich der Armaturenbrettverkleidung, ist es oft wünschenswert, der Oberfläche des Schaumfolienlaminats aus optischen Gründen eine Strukturierung zu verleihen. Hierfür kann die lackierte Dekorschicht vor der Vernetzung in einem Prägeprozess mit einer dreidimensionalen Struktur versehen werden. Diese Strukturierung lässt sich in die noch unvernetzte Dekorschicht einbringen und wird durch den folgenden Vernetzungsschritt fixiert, so dass beim nachträglichen Umformen, wie beispielsweise Tiefziehen, sowie auch bei nachträglicher Temperaturbeanspruchung in der Endanwendung, wie beispielsweise starke Sonneneinstrahlung und damit verbundene Erwärmung der Oberfläche des Schaumfolienlaminats, die Struktur erhalten bleibt.

Zur weitergehenden technologischen Erläuterung: Ansatz zur Reduzierung der Weichheit der erfindungsgemäßen Schaumschicht ist die Verwendung von LLDPE, LDPE und PP/EPR. Die PP/EPR-Mischungen enthalten fein dispergiertes PP. Durch Verwendung von PP/EPR kann die benötigte Menge an PP deutlich reduziert werden. Dies führt zu einer deutlichen Reduktion des E-Moduls. Gleichzeitig wird eine hohe Temperaturbeständigkeit, insbesondere die Narbbeständigkeit, beibehalten. Durch die Verwendung von LLDPE und LDPE können vorteilhafte Weichheit und Schäumbarkeit erreicht werden. Zusätzlich kann durch das Anschäumen der kompakten Matrixmaterialien durch Direktextrusion mittels chemischer Treibmittel oder Einbringen von Gasen eine weitere Reduktion des E-Moduls und damit eine Verbesserung in der Haptik erreicht werden. Die Bedeutung der Haptik wurde vorstehend eingehend behandelt, worauf verwiesen sei.

Nachfolgend sollen die besonderen Vorteile, die mit der Erfindung verbunden sind, herausgestellt werden:
Das erfindungsgemäße Schaumfolienlaminat zeigt demzufolge eine Vielzahl von wertvollen Vorteilen, die belegen, dass die zugrunde gelegte Aufgabe vollumfänglich gelöst wurde: Der E-Modul liegt zwischen 30 bis 60 N/mm². Die wünschenswerte Temperaturbeständigkeit ist gegeben, dies insbesondere im Hinblick auf die Narbstabilität unter hoher Temperatur. Darüber hinaus ist es bedeutsam, dass das Schaumfolienlaminat die relevante Kälteflexibilität (bei - 35°C) aufweist. Insgesamt zielt die Erfindung darauf ab, dass die angesprochenen vorteilhaften Eigenschaften bei einem Verstreckungsgrad von unter 300%, insbesondere auch unter 200%, vorteilhaft in Erscheinung treten. Der Verstreckungsgrad von weniger als 300% ist eine praktische Anforderung. Werte von mehr als 300% bis zu 500% sind nicht praxiskonform.

Die Erfindung wird nachfolgend anhand von Beispielen näher erläutert:

### Beispiel 1 (Herstellung der Schaumschicht)

Die in der nachfolgenden Tabelle 1 bezeichneten Komponenten (von zwei Vergleichsbeispielen und zwei erfindungsgemäßen Beispielen) wurden zunächst gemischt und auf einem Zweiwellenextruder extrudiert, wobei im Extruderkopf vor der Düse eine Temperatur von etwa 210°C herrschte. Es wurde eine Schlitzdüse mit einer Düsenbreite von 30 cm und Düsenspalte von 0,5 mm verwendet. Durch die Extrusionstemperatur wurden unmittelbar Schaumfolien mit den in der Tabelle angegebenen Werten erhalten. Anschließend wurden die Schaumfolien (ohne kompakte Dekorschicht) hinsichtlich ihrer relevanten physikalischen Eigenschaften untersucht. Es wurde bei den Versuchen zunächst auf eine Dekorschicht verzichtet, um eine Verfälschung der Ergebnisse durch die Dekorschicht zu verhindern. Die Ergebnisse finden sich ebenfalls in der Tabelle 1 (Dicke, Dichte, E-Modul und Temperaturbeständigkeit).

**Tabelle 1**

| (Zusammensetzung der Schaumschicht) | | | | |
|---|---|---|---|---|
| Rezeptur | Vergleichsbeispiel 1 | Vergleichsbeispiel 2 | Beispiel 3 (Erfindung) | Beispiel 4 (Erfindung) |
| PP/EPR Blend | | | 27,5 | 20,0 |
| PP1 | 27,5 | | | |
| PP2 | | 27,5 | | |
| PE1 | 20,0 | 20,0 | 20,0 | 20,0 |
| PE2 | 52,5 | 52,5 | 52,5 | 60,0 |
| Pigment | 1 | 1 | 1 | 1 |
| Stabilisator | 2 | 2 | 2 | 2 |
| Treibmittel Masterbatch | 2 | 2 | 2 | 2 |

| Schaumeigenschaften | | | | |
|---|---|---|---|---|
| Dicke [mm] | 1,00 | 1,00 | 1,00 | 1,00 |
| Dichte [kg/m³] | 675 | 675 | 675 | 675 |
| E-Modul [N/mm²] | 58 | 64 | 24 | 14 |
| Temperaturbeständigkeit [°C] | 120 | 120 | 120 | 90 |

| | | | | |
|---|---|---|---|---|
| Angaben zu den Rezepturkomponenten: PP/EPR Blend: Biegemodul 330 MPa, MFR 0,8 g/10 min bei 230°C; 2,16 kg; Dichte 0,880 g/cm³ PP1: Typ: random-Polypropylen, Biegemodul 950 MPa, MFI = 1,8 g/10 min bei 230°C; 2,16 kg; Dichte 0,900 g/cm³ PP2: Typ: homo-Polypropylen, Biegemodul 1700 MPa, MFI = 2,0 g/10 min bei 230°C; 2,16 kg; Dichte 0,905 g/cm³ PE1: Typ: Low density Polyethylen, Biegemodul 260 MPa, MFI = 2,0 g/10 min bei 190°C; 2,16 kg; Dichte 0,922 g/cm³ PE2: Typ: Linear low density polyethylene, Biegemodul 4 MPa, MFI = 1,0 g/10 min bei 190°C; 2,16 kg; Dichte 0,857 g/cm³ Pigment: schwarzer Farbstoff aus 85 Gew.-% Polyethylen und 15 Gew.-% Ruß Stabilisator: UV-Stabilisator (HALS - sterisch gehindertes Phenol) Treibmittel Masterbatch: Hydrocerol 592 (60 Gew.-% Polyethylen und 40 Gew.-% Citrate) | | | | |

### Beispiel 2 (Herstellung des Schaumfolienlaminats)

Die nach Beispiel 1 erhaltenen Schaumschichten wurden mit einer lackierten kompakten Dekorschicht versehen. Die Dekorschicht wurde durch Extrusion produziert. Die Aufbereitung der Rohstoffe der Dekorschicht (1/3 Polyethylen, 1/3 Polypropylen, 1/3 EPR), zusammen mit weiteren Prozessadditiven, wie Farb- und Gleitmitteln, fand in der Plastifiziereinheit statt. Diese bestand aus einem temperierten Zylinder mit einer Entgasungszone und zwei gleichsinnig drehenden Schnecken mit unterschiedlichen Scher- und Mischelementen. In dieser Einheit wurde das Material eingezogen, gefördert und durch die entstandene Scherenergie und eine Temperierung von außen aufgeschmolzen und homogenisiert. Die Zugabe dieser Materialien in Form von Granulaten erfolgte über einen Trichter. Eine eingebaute Dosieranlage sorgte dabei für eine kontinuierliche und gleichmäßige Zuteilung. Über eine Breitschlitzdüse wurde die Schmelze zum flächigen Folienmaterial ausgeformt. Die so vorgeformte Schmelze wurde anschließend über ein Glättwerk abgezogen, geglättet und gekühlt. Nach dem Abkühlen erfolgte die Dickenmessung und Aufwicklung der Folie. Die Dicke der Dekorschicht betrug in den dargestellten Konstruktion 0,50 mm. Die etwa 3 µm dicke Lackschicht wurde anhand des Rastertiefdruckverfahrens hergestellt.

Die erhaltenen Schaumfolienlaminate wurden im Hinblick auf Dicke, E-Modul, Temperaturbeständigkeit, Flexibilität bei -35°C und Verstreckung < 300% vermessen. Die Messdaten finden sich in der Tabelle 2.

**Tabelle 2**

| (Eigenschaften des gesamten Schaumfolienlaminats) | | | | |
|---|---|---|---|---|
| Konstruktion* | Vergleichsbeispiel 1 | Vergleichsbeispiel 2 | Beispiel 3 (Erfindung) | Beispiel 4 (Erfindung) |
| Dicke [mm] | 1,50 | 1,50 | 1,50 | 1,50 |
| E-Modul [N/mm²] | 92 | 101 | 49 | 35 |
| Temperaturbeständigkeit [°C] | 120 | 120 | 120 | 90 |
| Kälteflexibilität bei -35°C | i.o. | i.o. | i.o. | i.o. |
| Verstreckung <300% | i.o. | i.O. | i.o. | i.o. |

| | | | | |
|---|---|---|---|---|
| * Kombination 0,50 mm Dekorschicht mit der nach Beispiel 1 erhaltenen Schaumschicht, wobei der E-Modul der Oberfolie 148 N/mm² beträgt. | | | | |

### Anhang

Der E-Modul, die Temperaturbeständigkeit, die Dichte, der Schmelzflussindex, der Biegemodul sowie die Kälteflexibilität, erfindungsgemäß von Bedeutung, wurden wie folgt bestimmt:
**1.** E-Modul: Zugversuche werden durchgeführt, um die Folien in ihrer grundlegenden Mechanik zu charakterisieren. Mit dieser Prüfung kann der E-Modul ermittelt werden. Er wird herangezogen, um die Weichheit zu beurteilen. Beim Zugversuch wird ein genormter Prüfkörper zwischen zwei Klemmbacken eingespannt und mit konstanter Traversengeschwindigkeit auseinandergezogen. Mit Hilfe einer Kraftmessdose werden dabei auftretende Kräfte aufgezeichnet. Um Proben mit unterschiedlichen Querschnitten miteinander vergleichen zu können, wird die Kraft F auf den Ausgangsquerschnitt A0 bezogen. Daraus ergibt sich die Spannung σ.
   Die Spannung bei der maximalen aufgezeichneten Kraft wird Zugfestigkeit σM genannt. Als Dehnung ε wird die auf die Ausgangsmesslänge L0 des Prüfkörpers bezogene Verlängerung ΔL bezeichnet. Der E-Modul wird im Hooke'schen Bereich, in dem die Verformung reversibel ist, bestimmt. Dieser Bereich beschränkt sich auf geringe Dehnungen. Der E-Modul E ist das Verhältnis aus Spannungsänderung Δσ zu Dehnungsänderung Δε und ein Maß für die Steifigkeit. Je größer E, desto steifer das Material. Der E-Modul wurde mittels Regression, von 0,05 % bis 1 % Dehnung, mit einer Geschwindigkeit von 1 mm/min bestimmt. Die Zugversuche werden nach DIN EN ISO 527-3 (Stand: 07/2003) mit 2000 mm/min durchgeführt, auf die die Prüfgeschwindigkeit nach der E-Modul-Ermittlung erhöht wird. Es werden Prüfkörper des Typs 5 verwendet.
**2.** Temperaturbeständigkeit: Die Prüfung der thermischen Stabilität erfolgt nach DIN 53377 (Stand: 04/2015) mit einem 15 × 15 cm großem Muster durchgeführt, auf dem mit einer Schieblehre ein 10 × 10 cm großes Kreuz von der Mitte aus gezeichnet ist. Dieses Muster wird bei mehreren Temperaturen für 24 Stunden in einen Trockenschrank gelegt. Nach 24 Stunden wird der prozentuale Schrumpf in Längs- und Querrichtung gemessen. Die Temperatur, bei der maximal ein Schrumpf von 5% in Längs- und Querrichtung auftritt, wird als thermische Stabilität des Musters definiert.
**3.** Dichte: Bestimmt nach ISO 1183 (Stand: 07/2004)
**4.** Schmelzflussindex (MFI, melt flow index):
   Bestimmt gemäß DIN EN ISO 1133 (Stand: 03/2012) bei einer Temperatur von 230°C bzw. 190°C und einer Last von 2,16 kg. Der Schmelzflussindex (MFI) wird auch als Schmelze-Massefließrate (MFR) bezeichnet.
**5.** Biegemodul: Bestimmt nach ISO 178 (Stand: 12/2010)
**6.** Kälteflexibilität: Die Kälteflexibilität wird bestimmt, um die Folie in ihrer grundlegenden Mechanik in der Kälte zu charakterisieren. Mit dieser Prüfung kann die Sprödigkeit ermittelt werden. Die Prüfung wird über eine Kugelfallprüfung nach VDA 237-101 (Stand: 01/1996) aus einer Höhe von 230 mm bei -35°C durchgeführt. Diese Eigenschaft ist zur Beurteilung der Tauglichkeit des Materials im Automobilinnenraum notwendig.

## Patentansprüche

1. Verfahren zur Herstellung eines tiefziehfähigen Schaumfolienlaminats mit mindestens einer eine Lackschicht aufweisenden kompakten Dekorschicht und mindestens einer mit der Dekorschicht verbundenen Schaumschicht aus extrudiertem geschäumten Kunststoff, wobei die Herstellung der Schaumschicht derartig erfolgt, dass der Kunststoff in Gegenwart eines festen chemischen, inerten flüssigen und/oder inerten gasförmigen Treibmittels extrudiert wird, die gebildete Schaumschicht mit der lackierten Dekorschicht versehen wird, gegebenenfalls mit der unlackierten kompakten Dekorschicht im Rahmen einer Co-Extrusion, wobei vor oder nach dem Ausbilden der lackierten kompakten Dekorschicht auf der Schaumschicht eine vernetzende Behandlung mit Elektronenstrahlen durchgeführt wird, **dadurch gekennzeichnet, dass** der zur Extrusion herangezogene Kunststoff eine Mischung aus LLDPE, aus LDPE und aus einer PP/EPR-Mischung einer Dichte von 0,850 bis 0,925 insbesondere 0,860 bis 0,890 enthält.

2. Verfahren nach Anspruch 1, **dadurch gekennzeichnet, dass** die lackierte kompakte Dekorschicht zur Weiterverarbeitung des Schaumfolienlaminats im Positiv-Tiefziehverfahren in einem Prägeschritt genarbt wird.

3. Verfahren nach einem der Ansprüche 1 bis 2, **dadurch gekennzeichnet, dass** in der zu extrudierenden Kunststoffmischung auf 1 Gewichtsteil PP/EPR-Mischung 0,7 bis 3,0, insbesondere 1,5 bis 2,5 Gewichtsteile LLDPE sowie 0,5 bis 1,5, insbesondere 0,7 bis 1,2 Gewichtsteile LDPE entfallen.

4. Verfahren nach mindestens einem der Ansprüche 1 bis 3, **dadurch gekennzeichnet, dass** die Bestandteile der zu extrudierenden Kunststoffmischung folgende physikalische Werte aufweisen:
a) LLDPE einen MFI (190°C, 2,16 kg nach DIN EN ISO 1133) von 0,5 bis 4,0 g/10 min, insbesondere 0,7 bis 1,5 g/10 min, und/oder oder einen Biegemodul (nach ISO 178) von 2 bis 20 MPa, insbesondere von 4 bis 10 MPa,
b) LDPE einen MFI (190°C, 2,16 kg nach DIN EN ISO 1133) von 0,5 bis 4,0 g/10 min, insbesondere 0,7 bis 1,5 g/10 min, und/oder oder einen Biegemodul (nach ISO 178) von 100 bis 400 MPa insbesondere von 200 bis 300 MPa,
c) PP/ERP einen MFI (230°C, 2,16 kg nach DIN EN ISO 1133) von 0,05 bis 5,0 g/10 min, insbesondere von 0,5 bis 1,0 und/oder einen Biegemodul (nach ISO 178) von 10 bis 500 MPa insbesondere von 100 bis 350 MPa.

5. Verfahren nach mindestens einem der vorhergehenden Ansprüche, **dadurch gekennzeichnet, dass** das Treibmittel unter endothermen und exothermen festen chemischen Treibmitteln ausgewählt wird, insbesondere unter Citronensäure und deren Salzen, vorzugsweise deren Alkali-, Erdalkali- und Ammoniumsalzen, Natriumhydrogencarbonat, Azodicarbonamid oder Mischungen von diesen und/oder Citronensäureestern.

6. Verfahren nach mindestens einem der vorhergehenden Ansprüche, **dadurch gekennzeichnet, dass** die Aktivierungstemperatur der festen chemischen Treibmittel 180°C oder mehr, insbesondere 200°C oder mehr beträgt.

7. Verfahren nach mindestens einem der vorhergehenden Ansprüche, **dadurch gekennzeichnet, dass** der Gehalt an festem chemischen Treibmittel, bezogen auf die zu extrudierende Kunststoffmischung, 0,1 bis 5 Gew.-%, vorzugsweise 0,25 bis 3 Gew.-%, insbesondere 0,5 bis 2 Gew.-% beträgt.

8. Verfahren nach mindestens einem der vorhergehenden Ansprüche, **dadurch gekennzeichnet, dass** die zu extrudierende Kunststoffmischung als Schmelze, als Granulat oder in Pulverform mit dem jeweiligen Treibmittel versetzt bzw. vermischt wird.

9. Verfahren nach mindestens einem der vorhergehenden Ansprüche, **dadurch gekennzeichnet, dass** die Schaumschicht durch Behandlung mit Elektronenstrahlen vernetzt wird, insbesondere bis auf einen Gelgehalt von 10 bis 70%, vorzugsweise von 30 bis 55% und insbesondere von 40 bis 50%, gemessen nach 24-stündiger Extraktion in siedendem Xylol.

10. Verfahren nach mindestens einem der vorhergehenden Ansprüche, **dadurch gekennzeichnet, dass** die lackierte kompakte Dekorschicht vor dem Vernetzen in einem Prägeschritt mit einer dreidimensionalen Struktur zur Weiterverwendung in einem Positiv-Tiefziehverfahren versehen wird oder die Schaumschicht vernetzt und anschließend die lackierte kompakte Dekorschicht zur Weiterverwendung in einem Negativ-Tiefziehverfahren auf die vernetzte Schaumschicht aufgetragen wird.

11. Schaumfolienlaminat, erhältlich nach einem Verfahren nach mindestens einem der vorhergehenden Ansprüche 1 bis 10, gekennzeichnet durcheinen E-Modul (nach DIN EN ISO 527-3) von 30 bis 60 N/mm².

12. Verwendung eines Schaumfolienlaminats nach Anspruch 11 als tiefgezogenes, insbesondere hinterspritztes oder hinterpresstes oder hinterschäumtes Formteil, insbesondere in Flugzeugen, in Kraftfahrzeugen, für Fahrzeuginnenverkleidungen oder -verkleidungsteile, insbesondere Schalttafeln oder Armaturenbrettern, Säulen, Kraftfahrzeugseitenverkleidungen, -türverkleidungen und -ablagen.

13. Verwendung eines Schaumfolienlaminats nach Anspruch 12 als ungeschwächte Dekorfolie für Airbagverkleidungen.

## Claims

1. Process for the production of a thermoformable foam film laminate with at least one layer of compact
decorative layer and at least one foam layer of extruded foamed plastic connected to the decorative layer, wherein the foam layer is produced in such a way that the plastic is extruded in the presence of a solid chemical, inert liquid and/or inert gaseous propellant, the foam layer formed with
of the lacquered decorative layer, if necessary with the unpainted compact decorative layer in the context of a co-extrusion, whereby a cross-linking treatment with electron beams is carried out on the foam layer before or after the formation of the lacquered compact decorative layer, **characterised in that** the
plastic used for extrusion contains a mixture of LLDPE, LDPE and a PP/EPR mixture with a density of 0.850 to 0.925 in particular 0.860 to 0.890 g/cm³.

2. The method of claim 1, **characterized in that** the varnished
compact decorative layer for further processing of the foam foil laminate is grained in a single embossing step using the positive thermoforming process.

3. A method according to any one of claims 1 to 2, **characterised in that** in the plastic mixture to be extruded on 1 part by weight
PP/EPR mixture 0.7 to 3.0, in particular 1.5 to 2.5 parts by weight LLDPE and
0.5 to 1.5, in particular 0.7 to 1.2 parts by weight of LDPE, are omitted.

4. Method according to at least one of claims 1 to 3, whereby
indicates that the components of the plastic mixture to be extruded have the following physical values:
a) LLDPE an MFI (190°C, 2.16 kg according to DIN EN ISO 1133) of 0.5 to 4.0 g/10 min, in particular 0.7 to 1.5 g/10 min, and/or a bending modulus (according to ISO 178) of 2 to 20 MPa, in particular
from 4 to 10 MPa,
b) LDPE an MFI (190°C, 2.16 kg according to DIN EN ISO 1133) of 0.5 to 4.0 g/10 min, in particular 0.7 to 1.5 g/10 min, and/or a bending modulus (according to ISO 178) of 100 to 400 MPa, in particular of
200 to 300 MPa,
c) PP/ERP an MFI (230°C, 2.16 kg according to DIN EN ISO 1133) of 0.05 to 5.0 g/10 min, in particular from 0.5 to 1.0 and/or a bending modulus (according to ISO 178) from 10 to 500 MPa, in particular from 100 to 350 MPa.

5. Method according to at least one of the preceding claims, **characterized in that** the blowing agent is under endothermic and
exothermic solid chemical propellants, in particular citric acid and its salts, preferably its alkali, alkaline earth and ammonium salts, sodium bicarbonate, azodicarbonamide or mixtures thereof and/or citric acid esters.

6. A method according to at least one of the preceding claims, **characterized in that** the activation temperature of the solid chemical blowing agents is 180°C or
more, in particular 200°C or more.

7. A method according to at least one of the preceding claims, **characterized in that** the content of solid chemical blowing agent in relation to the plastic mixture to be extruded is 0.1 to 5% by weight, preferably 0.25 to 3% by weight, in particular 0.5 to 2% by weight

8. A method according to at least one of the preceding claims, **characterized in that** the plastic mixture to be extruded is combined as a melt, as a granulate or in powder form with the respective blowing agent

9. A method according to at least one of the preceding claims, **characterized in that** the foam layer is cross-linked by treatment with electron beams, in particular to a gel content of 10 to 70%, preferably from 30 to 55% and especially from 40 to 50%, measured after 24 hours of extraction in boiling xylene.

10. A method according to at least one of the preceding claims, **characterized in that** the lacquered compact decorative layer is provided with a three-dimensional structure for further use in a positive deep-drawing process in a single embossing step before cross-linking
or the foam layer is cross-linked and then the painted compact decorative layer is applied to the cross-linked foam layer for further use in a negative thermoforming process.

11. Foam film laminate, available according to a process according to at least one of the preceding claims 1 to 10, **characterized by** a modulus of elasticity (according to DIN EN ISO 527-3) from 30 to 60 N/mm².

12. Use of a foam film laminate according to claim 11 as a deep-drawn, in particular back-injected or back-pressed or
Back-foamed moulding, in particular in aircraft, in motor vehicles, for vehicle interior trim or trim parts, in particular switchboards or dashboards, pillars, motor vehicle side panels, door panels and shelves.

13. Use of a foam film laminate according to claim 12 as an unattenuated decorative film for airbag panels.

## Revendications

1. Procédé pour la production d'un film laminé en mousse thermoformable avec au moins une couche de film compact
couches décoratives et au moins une couche de mousse de plastique mousse extrudé reliées à la couche décorative, où la couche de mousse est produite de manière à ce que le plastique soit extrudé en présence d'un produit chimique solide, d'un liquide inerte et/ou d'un propergol gazeux inerte, la couche de mousse formant avec
de la couche décorative laquée, si nécessaire, avec la couche décorative compacte non peinte dans le contexte d'une co-extrusion, où un traitement de réticulation avec des faisceaux d'électrons est réalisé sur la couche de mousse avant ou après la formation de la couche décorative compacte laquée, **caractérisée par le fait que**
plastique 15 utilisé pour l'extrusion contient un mélange de LLDPE, LDPE et un mélange PP/EPR avec une densité de 0,850 à 0,925 en particulier de 0,860 à 0,890 g/cm³.

2. La méthode de la revendication 1, **caractérisée par le fait que** la version vernie couches décoratives compactes pour le traitement ultérieur du feuille de mousse sont granulées en une seule étape de rebossage utilisant le thermoformage positif.

3. Une méthode selon l'une des revendications 1 à 2, **caractérisée par** celle dans le mélange plastique à extruder sur 1 partie en poids
PP/EPR mélange 0,7 à 3,0, en particulier 1,5 à 2,5 pièces en poids LLDPE et
0,5 à 1,5, en particulier 0,7 à 1,2 parties en poids de LDPE, sont omises.

4. Méthode selon au moins une des revendications 1 à 3, selon laquelle indique que les composants du mélange plastique à extruder ont les valeurs physiques suivantes :
a) LLDPE un MFI (190°C, 2,16 kg selon DIN EN ISO 1133) de 0,5 à 4,0 g/10 min, en particulier 0,7 à 1,5 g/10 min, et/ou un module de flexion (selon ISO 178) de 2 à 20 MPa, en particulier
de 4 à 10 MPa,
b) LDPE un MFI (190°C, 2,16 kg selon DIN EN ISO 1133) de 0,5 à 4,0 g/10 min, en particulier 0,7 à 1,5 g/10 min, et/ou un module de flexion (selon ISO 178) de 100 à 400 MPa, en particulier de
200 à 300 MPa,
c) PP/ERP un MFI (230°C, 2,16 kg selon DIN EN ISO 1133) de 0,05 à 5,0 g/10 min, en particulier de 0,5 à 1,0 et/ou un module de flexion (selon ISO 178) de 10 à 500 MPa, en particulier de 100 à 350 MPa.

5. Méthode selon au moins une des affirmations précédentes, **caractérisée en ce que** l'agent de soufflage est sous endothermie et
propergols chimiques solides exothermiques, en particulier l'acide citrique et ses sels, de préférence ses sels alcalins, alcalino-terreux et ammoniaques, bicarbonate de sodium, azodicarbonamide ou mélanges de ceux-ci et/ou esters d'acide citrique.

6. Une méthode selon au moins une des affirmations précédentes, **caractérisée par** la température d'activation des agents de soufflage chimiques solides de 180°C ou plus, en particulier 200°C ou plus.

7. Une méthode selon au moins une des affirmations précédentes, **caractérisée par** la teneur en agent de soufflage chimique solide par rapport au mélange plastique à extruder de 0,1 à 5 % en poids, de préférence de 0,25 à 3 % en poids, en particulier de 0,5 à 2 % en poids

8. Une méthode selon au moins une des affirmations précédentes, **caractérisée par le fait que** le mélange plastique à extruder est combiné sous forme de fondu, de granulé ou sous forme de poudre avec l'agent soufflant concerné

9. Une méthode selon au moins une des affirmations précédentes, **caractérisée par le fait que** la couche de mousse est réticulée par traitement par faisceaux d'électrons, en particulier à une teneur en gel de 10 à 70 %, de préférence entre 30 et 55 % et surtout entre 40 et 50 %, mesuré après 24 heures d'extraction dans du xylène bouillant.

10. Une méthode selon au moins une des revendications précédentes, **caractérisée par** la mesure où la couche décorative compacte laquée est dotée d'une structure tridimensionnelle pour une utilisation ultérieure dans un procédé de tirage profond positif en une seule étape avant la réticulation
ou la couche de mousse est réticulée, puis la couche décorative compacte peinte est appliquée sur la couche de mousse réticulée pour une utilisation ultérieure dans un procédé de thermoformage négatif.

11. Feuillet de film en mousse, disponible selon un procédé au moins l'une des revendications précédentes de 1 à 10, **caractérisée par** un module d'élasticité (selon DIN EN ISO 527-3) de 30 à 60 N/mm².

12. Utilisation d'un film laminé en mousse selon la revendication 11 comme un film à tirage profond, en particulier injecté ou pressé à fond ou
Moulures à mousse arrière, en particulier dans les avions, les véhicules à moteur, pour les garnitures ou pièces de garnitures intérieures des véhicules, en particulier les tableaux électriques ou tableaux de bord, les montants, les panneaux latéraux des véhicules motorisés, les panneaux de porte et les étagères.

13. Utilisation d'un film laminé en mousse selon la revendication 12 comme film décoratif non atténué pour les panneaux d'airbag.
